Europäisches Patentamt

European Patent Office

Office européen des brevets

(11) Veröffentlichungsnummer : **0 045 280 B1**

(12) **EUROPÄISCHE PATENTSCHRIFT**

(45) Veröffentlichungstag der Patentschrift :
03.04.85

(21) Anmeldenummer : 81810296.4

(22) Anmeldetag : 20.07.81

(51) Int. Cl.⁴ : **A 01 N 25/02, A 01 N 25/04, A 01 N 37/02, A 01 N 65/00**

(54) Zubereitung zur Bekämpfung von Schnecken, Behälter zur Aufnahme dieser Zubereitung und Verwendung von Substanzen in Schneckenbekämpfungsmitteln.

(30) Priorität : 24.07.80 CH 5668/80

(43) Veröffentlichungstag der Anmeldung :
03.02.82 Patentblatt 82/05

(45) Bekanntmachung des Hinweises auf die Patenterteilung : 03.04.85 Patentblatt 85/14

(84) Benannte Vertragsstaaten :
AT BE CH DE FR GB IT LI LU NL SE

(56) Entgegenhaltungen :
CH-A- 491 601
DE-A- 1 542 340
GB-A- 623 230
GB-A- 1 033 692
GB-A- 1 160 674
US-A- 4 179 499
H.B. Heath: Flavor Technology; S. 194, 1978
S. SELIM: The Control of Snail and Slup Pests in Agriculture. Part I
JOURNAL OF ECONOMIC ENTOMOLOGY, Band 63, Nr. 6, Dezember 1970, Seiten 1919-1922 College Park, Maryland, U.S.A. F.F. SMITH et al.: "New baits and attractants for slugs"
J.S. HOUGH et al.: "Malting and brewing science", 1971, Seiten 608-624, Chapman and Hall Ltd. London, G.B.
CHEMICAL ABSTRACTS, Band 84, Nr. 11, 15. März 1976, Seite 115, Nr. 70307p Columbus, Ohio, U.S.A. A. LEMMA et al.: "Molluscicidal properties of endod (Phytolacca dodecandra). III. Stability and potency under different environmental conditions"
Die Akte enthält technische Angaben, die nach dem Eingang der Anmeldung eingereicht wurden und die nicht in dieser Patentschrift enthalten sind.

(73) Patentinhaber : **SIPURO AG**
**Erlenauweg 13**
**CH-3110 Münsingen (CH)**

(72) Erfinder : **Rohrer, Hermann**
**Kirchenzelg**
**CH-3115 Gerzensee (CH)**

(74) Vertreter : **Haffter, Tobias Fred, Dr. Dipl.-Phys. et al**
**PATENTANWALTS-BUREAU ISLER AG Postfach 6940**
**Walchestrasse 23**
**CH-8023 Zürich (CH)**

## Beschreibung

Schnecken verschiedener Art richten alljährlich grosse Schäden an Nutz- und Zierpflanzen an. Deshalb wurde schon mit zahlreichen Mitteln versucht, Schnecken zu bekämpfen [siehe z. B. das Standardwerk von D. Godan « Schadschnecken und ihre Bekämpfung », Verlag Eugen Ulmer, Stuttgart (1979)]. Die bekanntesten Mittel hierfür sind Schneckenkörper auf Metaldehydbais. Schneckenkörner sind in verschiedener Beziehung unbefriedigend ; sie enthalten Molluskizide, die sehr giftig für Vögel, Säugetiere und auch für den Menschen sind ; sie werden von Körnerfressern bevorzugt vertilgt ; verendete Schnecken können von anderen Tieren, z. B. Igeln, gefressen werden, die dadurch auch vergiftet werden. Schneckenkörner sind bei feuchter Witterung weniger wirksam oder sogar unwirksam. Die vergifteten Schnecken schleppen sich noch über längere Strecken und hinterlassen unappetitliche Schleimspuren. Die verendeten Schnecken müssen oft eingesammelt und vernichtet werden.

Es wurde bereits vorgeschlagen [J. Economic Entomology, Vol. 63, 6, 1919-22 ; M. B. Green « Chemicals for Crop Protection and Pest Control », Seite 92], Bier und Obstsäfte als Lockmittel für Schnecken zu verwenden, die dann in der Flüssigkeit ertrinken. Bier enthält zwar geringe Mengen Carbonsäureester [Hough et al., Malting and Brewing Science, Seite 615, 617, 621 (1971)], doch wurde nachgewiesen [Sami Selim, Dissertation 74-16291 der University of California, « The Control of Snail and Slug Pests in Agriculture », part II : « Beer as a Slug Attractant »], dass diese Ester nicht für die Lockwirkung des Biers verantwortlich sind.

Das Hausmittel Bier ist verhältnismässig teuer, lockt nur über geringe Distanz, zersetzt sich schnell, es muss in Bechern in den Boden vergraben werden, welche mit den verendeten Schnecken und zersetztem Bier entfernt und beseitigt werden müssen.

Es wurden auch bereits pasten- oder gelförmige Schneckenbekämpfungsmittel vorgeschlagen [GB-PS 623.230 ; CH-PS 491.601 ; GB-PS 1.033.692], doch lässt sich auch damit meistens die Verwendung eines Gefässes nicht umgehen.

In der GB-PS 1.160.674 wurde ferner vorgeschlagen, als Haftmittel für flüssige Pflanzenbehandlungsmittel ein Fermentationsprodukt von Xanthomonas-Bakterien zu verwenden.

Aus der US-PS 4.179.499 ist sodann die Verwendung von gewissen Amiden, unter anderem Capsicain und Pelargylsäurevanillylamid als Schreckstoff für Warmblütler in Schneckenbekämpfungsmitteln bekannt.

Der Erfindung liegt die Aufgabe zugrunde, ein Mittel zur Bekämpfung von Schnecken zu schaffen, welches die oben genannten Nachteile der bekannten Mittel nicht aufweist. Insbesondere sollte das Mittel für Menschen und andere Tiere ungiftig sein. Ausserdem soll das Mittel leicht und ohne Umstände anwendbar sein und keine Rückstände naturfremder Art in oder auf dem Boden zurücklassen.

Die erfindungsgemässe Zubereitung zur Bekämpfung von Schnecken, welche

(a) mindestens einen Lockstoff für Schnecken ;

(b) mindestens einen Frassstoff ;

(c) mindestens eine auf Schnecken betäubend und/oder koordinationsstörend und/oder lähmend und/oder tötend wirkende Substanz ;

(d) Wasser, und

(e) gegebenenfalls ein Verdickungsmittel

enthält, ist dadurch gekennzeichnet, dass sie als Lockstoff mindestens 0,2 Gewichtspromille eines Esters einer niederen bis mittleren Carbonsäure mit einem niederen einwertigen Alkohol oder eine Mischung solcher Ester und als Komponente (c) mindestens einen niederen einwertigen Alkohol, vorzugsweise Aethanol, und/oder ein Molluskizid, enthält.

Die Zubereitung kann in Form eines wasserfreien Konzentrates vorliegen, das vor Gebrauch mit Wasser verdünnt wird.

Gegenstand der Erfindung ist ferner ein Verfahren zum Schutz von Pflanzenkulturen gegen Schnecken, das dadurch gekennzeichnet ist, dass man den Kulturboden in Abständen mit einer wirksamen Menge einer Zubereitung nach der Erfindung versieht.

Die Bestandteile der erfindungsgemässen Zubereitung bestehen bevorzugt aus Stoffen, die als solche in der Natur vorkommen, gegebenenfalls leicht chemisch modifiziert sind, d. h. methyliert, äthyliert, propyliert, methoxyliert, äthoxyliert, propoxyliert, carboxymethyliert, acetyliert, propionyliert oder hydriert sind und/oder für Lebensmittel zugelassen, d. h. für Menschen ungefährlich sind.

Als Lockstoff werden Ester von niederen bis mittleren Carbonsäuren mit einwertigen niederen bis mittleren Alkoholen in einer Konzentration von mindestens 0,2 Gewichtspromille eingesetzt, wobei die Schnecken aus einer Umgebung mit einem grösseren Radius angelockt werden als z. B. mit Bier, und bei Vorhandensein von alternativen Lockstoffen wurden die oben genannten Ester bevorzugt. Geeignete Ester sind insbesondere solche mit bis zu 8 Kohlenstoffatomen. Vorzugsweise wird ein Acetat, vorzugsweise Aethyl- oder ein Propylacetat, ein Butyrat, vorzugsweise n-Butyrat oder Isobutyrat, insbesondere deren Methyl-, Aethyl- oder ein Propylester, eingesetzt. Mischungen der genannten Ester, insbesondere von einem Butyrat, zwei verschiedenen Acetaten und einem Formiat, ergeben besonders gute Resultate. Diese niederen aliphatischen Ester bis zu 7 Kohlenstoffatomen werden im allgmienen in Konzentrationen bis zu 2 Gewichtspromille, bezogen auf die Gesamtzubereitung, eingesetzt.

Die Vorteile dieses gemäss der Erfindung neu verwendbaren Lockstoffes sind :

— grosse Wirksamkeit, Lockradius von 2 bis 3 m (gegenüber höchstens 10 cm bei bisherigen Kleieködern) ;

— billiger Preis verglichen mit natürlichen und synthetischen Aromen ;

— chemische Beständigkeit, vor allem gegen Oxidation, im Gegensatz zu üblichen Aromen ;

— Wirkung auf alle Schnecken ; in den Fallen fanden sich sämtliche in Mitteleuropa vorkommenden Nacktschnecken und die als Schadschnecken auftretenden Gehäuseschnecken.

Als auf Schnecken betäubend und/oder koordinationsstörend und/oder lämend wirkende, jedoch nicht sofort letal wirkende Substanzen können einwertige niedere Alkohole, z. B. Aethanol, Isopropanol, Isobutanol, Isoamylalkohol und andere verwendet werden. Aethanol wird aufgrund seiner geringen Toxizität für andere Lebewesen, seiner zusätzlichen Lockwirkung und der geringen Anreicherungstendenz in den Schnecken bevorzugt. Bevorzugte Konzentrationen betragen etwa 3 bis 25 Gewichtsprozent, insbesondere 5 bis 15 Gewichtsprozent, bezogen auf die ganze Zubereitung. Bei Konzentrationen in der Grössenordnung von 10 Gewichtsprozent tritt die narkotisierende und lähmende Wirkung sehr schnell nach der ersten Kontaktierung ein. Die höheren Alkohole sind entsprechend ihrem $LD_{50}$-Wert bei tieferen Konzentrationen wirksam, werden aber mit zunehmender Länge des Alkylrestes von Schnecken zunehmend abgelehnt. Auch eine zu hohe Alkoholkonzentration wirkt auf die Schnecken abstossend.

Die als Komponente (c) der erfindungsgemässen Zubereitung eingesetzten Alkohole, z. B. niedere Alkohole, insbesondere Aethanol, zeichnen sich als Naturprodukte bzw. aus Pflanzen erhältliche Substanzen durch Umweltfreundlichkeit aus ; sie sind leicht flüchtig und biologisch abbaubar, so dass unverbrauchte Mengen verdunsten oder abgebaut werden und nichts in der Erde zurückbleibt.

Aethanol, die Propanole und Isobutanol dienen nicht nur zur Betäubung und Lähmung der Schnecken, sondern üben eine zusätzliche Lockwirkung aus. Sie dienen ausserdem gleichzeitig noch zur Konservierung der Zubereitung und als Lösungsvermittler für die wenig polaren Komponenten.

Anstelle eines Alkohols, der auf die Schnecken zuerst betäubend, dann lähmend und erst später tötend wirkt, kann auch ein direkt molluskizid wirkender Stoff allein oder gegebenenfalls zusammen mit einem Alkohol für die Komponente (c) verwendet werden. Solche Molluskizide wirken frass- und/oder kontakttoxisch und verursachen eine irreversible Schädigung. Hierzu eignen sich z. B. bekannte molluskizide Wirkstoffe für terrestrische Schnecken, wie Metaldehyd und Carbamate, ebenso aber auch molluskizide Wirkstoffe, die bisher nur für aquatische und amphibische Schnecken bei der Bilharziosebekämpfung eingesetzt wurden. Zu dieser letzten Gruppe gehören insbesondere Wirkstoffe, die in Beeren der Endod (Phytolacca dodecandra), ferner in Phytolacca americana, Balanites aegyptica, Sapindus saponaria, Swartzia madagascariensis, Polygonium senegalense und dergleichen enthalten sind.

Solche Molluskizide wirken wahrscheinlich hauptsächlich über den Kontakt ; die Anwesenheit von Frassstoffen in der verwendeten Zubereitung dient dazu, die Schnecken zu längerem Verweilen zu veranlassen, wodurch die Kontaktzeit verlängert wird.

Solche molluskizide Wirkstoffe eignen sich auch zur Verwendung in einer pasten- oder gelförmigen Zubereitung, die in kleinen Mengen zwischen den Pflanzen auf den Boden verteilt werden. Auf diese Weise erübrigt sich das Anbringen von Bodenvertiefungen, jedoch liegen die toten Schnecken unappetitlich im Garten herum und sind nicht vor dem Zugriff schneckenfressender Nützlinge geschützt, wie bei der Fallenapplikation der Mischung auf Alkoholbasis, bei der die toten Schnecken in einer stark abschreckend gemachten unduchsichtigen Flüssigkeit versunken sind, die mit Erde zugeschüttet wird, sobald sie mit toten Schnecken angefüllt ist.

Die oben genannten Molluskizide pflanzlichen Ursprungs sind nicht toxisch für Kulturpflanzen. Sie können in Form der getrockneten pulverisierten Blätter, bevorzugt jedoch in wässeriger und insbesondere in alkoholischer (z. B. Aethanol, Isobutanol) Aufschlämmung in die Zubereitung einverleibt werden. Da sie meistens auch für andere Bodenlebewesen, z. B. Würmer, toxisch sind, empfiehlt es sich, sie entweder in einer verdickungsmittelhaltigen Zubereitung oder, falls die Zubereitung keinen Verdicker enthält, in einem hydrophobierten Gefäss einzusetzen.

Wenn die erfindungsgemässe Zubereitung direkt in Erdvertiefungen oder in porösen Gefässen zum Einsatz gelangt, empfiehlt sich der Zusatz eines Verdickungsmittels zur Zubereitung. Als Verdickungsmittel können die dem Fachmann bekannten Substanzen verwendet werden, z. B. Hydrokolloide natürlicher Art, wie Alginate, Carragheenate und Galactomannane oder biosynthetischer Art, wie Xanthan Gum oder Scleroglucane, semi-synthetische Verdickungsmittel, wie die Derivate der Cellulose, Stärke, Alginate und Galactomannane, kristalline Verdickungsmittel mineralischer Art, wie Bentonite und hochdisperse Kieselsäure oder organischer Art, wie mikrokristalline Cellulose, synthetische Verdickungsmittel, wie Polyacrylate oder Polyvinylalkohole.

Das Verdickungsmittel sollte verschiedenen Anforderungen genügen. So sollte es z. B. alkoholbeständig und biologisch abbaubar sein und seine Viskosität sollte bei der Anwendung nicht durch die Temperatur beeinflusst werden und sich auch bei langer Lagerung kaum verändern. Damit die verdickte Formulierung bei der Anwendung als Falle nicht zu schnell in der Erde versickert, sollte die Verdickerkomponente ferner gegen die aus den abgetöteten Schnecken austretenden Verdauungsenzyme (Cellulasen, Amylasen, Galactomannanasen) beständig sein, wobei sich zeigte, dass alle natürlichen und semi-synthetischen Hydrokolloide schnell, mit starkem Viskositätsabfall verbunden, angegriffen werden, mit einer erstaunlichen Ausnahme, dem Xanthan Gum, der absolut stabil ist. Je höher und je regelmässiger verestert oder veräthert semi-synthetische Hydrokolloide sind, desto resistenter sind sie gegen enzymatische Hydrolyse. Deshalb ist auch eine im Handel befindliche spezielle Hydroxyäthylcellulose, die unter der Marke Natrosol-B® von Hercules vertrieben wird, dank regelmässiger Verätherung enzymresistenter als die übrigen Cellulosederivate, doch ist der Zusatz einer der bekannten Cellulaseinhibitoren von Vorteil. Auch ein hochverätherter Hydroxypropylguar ist relativ stabil gegen enzymatischen Angriff durch Schneckenenzyme.

Die erfindungsgemässen Zubereitungen können giessbar aber auch pasten- oder gelförmig sein. Geissbare Zubereitungen sind vorzugsweise pseudoplastisch oder thixotrop mit einer schnellen Regenerationsfähigkeit ; wichtig ist es, dass die verdickte Formulierung ein solches Fliessverhalten zeigt, dass sie einerseits nicht in der Erde versickert oder durch die poröse Unterlage durchtritt, und dass andererseits die Schnecken bei der Anwendung als Falle darin versinken. Der Verdicker sollte deshalb möglichst nicht die Grenzflächenspannung heruntersetzen, um die Erdbenetzung möglichst gering zu halten, sollte eine möglichst hohe Wasserretention aufweisen, um die Wasserdiffusion in die umgebende Erde möglichst herunterzusetzen und sollte eine hohe Ruheviskosität bei vorzugsweise pseudoplastischem Fliessverhalten aufweisen, um das Versickern der Formulierung in die Erde zu verhindern.

Weil es als einziges natürliches Hydrokolloid alle obigen Forderungen erfüllt, wird als Verdickungsmittel ein durch Fermentation von Kohlenhydraten mit Bakterien der Art Xanthomonas erhältliches Heteropolysaccharid mit einem Molekulargewicht von mehreren Millionen besonders bevorzugt. Jede Grundeinheit dieses Heteropolysaccharides setzt sich aus Monosacchariden (Glukose und Mannose) und Glukoronsäure zusammen. Dieses Heteropolysaccharid ist als Handelsprodukt erhältlich, z. B. Rhodopol 23® von Rhône-Paulenc, Kelzan von Kelco, Xanthan Gum von Ceca. Einfachheitshalber wird das oben definierte Polysaccharid nachfolgend als Xanthan Gum bezeichnet, wie dies allgemein in der Fachliteratur üblich ist, obwohl auch andere Produkte der gleichen oder ähnlichen Zusammensetzung verwendet werden können.

Lösungen mit Xanthan Gum verhalten sich pseudoplastisch, d. h. sie verflüssigen sich unter der Einwirkung von Scherkräften, nehmen aber nach Beendigung dieser Einwirkung sofort ihre ursprüngliche Viskosität an.

Erfindungsgemässe Zubereitungen, die Xanthan Gum als Verdickungsmittel enthalten, lassen sich wegen ihrer Pseudoplastizität leicht aus einem Behälter, z. B. einer Flasche, giessen, nehmen danach im Ruhezustand wieder ihre hohe Ruheviskosität an, wodurch bei direktem Einbringen in eine unausgekleidete Vertiefung in der Erde ein Einsickern in den Boden vermieden wird. Hierfür genügen bereits Konzentrationen von 0,4 bis 1,2 Gewichtsprozent Xanthan Gum, bezogen auf die Zubereitung. Dadurch kann die erfindungsgemässe Zubereitung ohne Verwendung von zusätzlichen Gefässen in Vertiefungen in den Boden gegeben werden. Nachdem sich durch die Wirkung der erfindungsgemässen Zubereitung verendete Schnecken in dieser Vertiefung befinden, kann man letztere einfach mit Erde zudecken. Dadurch entfallen sowohl die Schleimspuren von vergifteten Tieren, wie auch das unappetitliche Einsammeln und Vernichten der toten oder der noch lebenden vergifteten Tiere. Sowohl Zubereitung wie Schnecken dienen danach durch die Verrottung zum Düngen der Erde.

Obwohl die erfindungsgemässe Zubereitung bevorzugt und am einfachsten direkt in Vertiefungen im Boden ausgesetzt wird, wobei bei lockerer Erde die Wände der Vertiefung mit Vorteil durch schwaches Andrücken formstabil gemacht werden, kann sie auch in Behältern verschiedenster Art eingesetzt werden.

Ein solcher Behälter sollte eine Oeffnung aufweisen, die derart beschaffen ist, dass die durch das Lockmittel angelockte und durch z. B. die Alkoholdämpfe und Aufnahme der alkoholhaltigen Zubereitung betäubte Schnecke in den Behälter fallen kann. Durch die hineinfallende sich bewegende Schnecke werden Scherkräfte entwickelt, die die Viskosität einer pseudoplastischen Zubereitung vermindern. Danach wird die ursprünglich hohe Ruheviskosität wieder hergestellt. Folglich kann sich die Schnecke aus einer verdickten, hochviskosen Zubereitung nicht mehr befreien, da zudem der Alkohol die Fussmuskulatur lähmt. Schliesslich gehen die Schnecken am dermal und oral eindringenden Alkohol zugrunde. Die Behälter können nach der Verwendung durch Zudecken mit Erde leicht beseitigt werden.

Um die unappetitliche Arbeit der Beseitigung des Behälters zu vermeiden, kann, wie weiter oben beschrieben, die Zubereitung direkt in Bodenvertiefungen gegeben oder ein verrottbarer oder auflösbarer Behälter oder ein solches Flächengebilde eingesetzt werden. Ein solcher Behälter kann in den Boden eingedrückt oder in eine Vertiefung in den Boden eingesetzt werden. Mit dem Flächengebilde kann die Vertiefung ausgelegt werden. Nachdem die Schnecken hineingeraten sind, wird der Behälter oder das Flächengebilde in der Vertiefung mit Erde zugedeckt. Die verbleibenden Rückstände sind ungiftig, biologisch abbaubar und dienen zusätzlich zur Düngung des Bodens.

Geeignete Materialien zur Herstellung solcher verrottbarer oder auflösbarer Behälter oder Flächengebilde sind faserige Materialien, wie Torf, Holzschliff, Halbzellstoff und Zellstoff oder durch Wasser quellbare oder lösliche Folien der angegebenen Verdickungsmittel. Die Gefässe können einige Zentimeter tief und z. B. 10 cm im Durchmesser betragen. Faserhaltige Flächengebilde können auch mit bekannten, hydrophobierenden oder imprägnierenden Mitteln auf der Seite behandelt werden, die mit der Lösung in Berührung gelangt, so dass diese nicht durchtreten kann, so dass aber von der anderen unbehandelten Seite her die Feuchtigkeit eindringen und damit die Verrottung einsetzen kann. Es empfiehlt sich, solche Behälter oder mit solchen Flächengebilden ausgekleidete Erdvertiefungen bis zum Rand der Zubereitung zu füllen.

Mit der erfindungsgemässen Zubereitung kann eine Schneckenfalle angelegt werden, indem die verdickte Lösung in eine Erdvertiefung gegossen wird. Dabei spielt auch die kleine Erdböschung als mechanisches Hindernis eine Rolle, indem sich die fussmuskelgelähmten Schnecken darüber nicht mehr befreien können und in die Lösung zurückfallen. Komponente (c), z. B. Alkohol, wirkt zusammen mit der Verdickerkomponente als « Schneckenleim ». Der Alkohol als Schneckennährstoff wirkt primär nicht toxisch, sondern lähmt nach fünf- bis zehnminütigem Frasskontakt die Fussmuskulatur der Schnecken, so dass sie sich nicht mehr aus der Zubereitung befreien können. Erst sekundär tritt bei den versunkenen Schnecken durch dermale Alkoholaufnahme der Tod ein.

Frassmittel veranlassen die Schnecken zur Einnahme und damit zur Kontaktierung der Zubereitung, so dass der Alkohol bzw. der molluskizide Wirkstoff in den Schneckenkörper diffundieren und im Falle des Alkohols die Fussmuskulatur lähmen kann. Mono-, Di- und Oligosaccharide (vorzugsweise Saccharose, Fructose und Glucose, z. B. in Form von Stärkesirup, Invertzucker oder Melasse), Dextrine und native oder vorverkleisterte Stärken, mikrokristalline Cellulose, pflanzliche oder tierische Proteine (wie Casein, Magermilchpulver, die bei der Stärkegewinnung anfallenden Weizen- und Maiskleber), zerquetschte oder feinst zerschnittene Pflanzen oder Früchte, eventuell in aufgearbeiteter From als Konzentrat oder Extrakt, in Konserven oder sprühgetrocknet sind u.a. geeignete Frassmittel. Diese Frassmittel oder vorteilhafter, Mischungen dieser Frassmittel, werden in Mengen begrenzt durch den Preis, vovn 1 bis 5 Gewichtsprozent, bezogen auf die Gesamtmischung, eingesetzt.

Die erfindungsgemässe Zubereitung kann ausser den Komponenten (a) bis (d) und einem Verdickungsmittel noch weitere Substanzen enthalten, wie Verdunstungsverzögerer, Stabilisatoren und Vergällungsmittel.

Bekannte Verdunstungsverzögerer werden eingesetzt, um ein vorzeitiges Austrocknen der Zubereitung durch Verdunsten der flüssigen Bestandteile zu vermeiden und die Abgabe der Lockstoffmengen zu regulieren. Bei der Verwendung der Zubereitung bilden sie im allgemeinen eine monomolekulare Deckschicht über die Flüssigkeitsoberfläche, wodurch die Verdunstung um 50 bis 80 % vermindert werden kann. Bevorzugte Verdunstungsverzögerer sind der natürliche Cetylalkohol, der auch in Pflanzenwachsen vorkommen soll, oder $C_{16-22}$-Fettalkohl mit 1 bis 3 Aethoxidresten, in Mengen von 0,5 bis 1 Gewichtspromille, empfehlenswert so eingearbeitet, dass der Verdunstungsverzögerer gegebenenfalls unter Erwärmen in der Komponente (c) der erfindungsgemässen Zubereitung vorgelöst wird.

Alle eigentlichen lebensmittelzulässigen Konservierungsmittel setzen die Fangwirkung der Formulierung herab, weil die betreffenden Stoffe abschreckend auf die Schnecken wirken, nur Hexamethylentetramin wird in Konzentrationen zwischen 0,1 bis 1 Gewichtspromille einigermassen toleriert. Es empfiehlt sich deshalb, auf ein eigentliches Konservierungsmittel zu verzichten und die erfindungsgemässe Formulierung mit dem Alkohol und dem pH gegen den mikrobiellen Angriff zu schützen. Wie sich bei Impftests zeigte, findet bei 12 Gewichtsprozent Aethanol und einem pH von 5,5 kein Keimwachstum mehr statt.

Als Abschreckmittel für Warmblüter wird vorzugsweise der reine Wirkstoff des Cayennepfeffers bzw. des Paprikas, bzw. anderer Capsicum-Arten, das Capsaizin, oder das « synthetische Capsaizin », das Pelargonsäurevanillylamid, in Konzentrationen von 0,01 bis 0,05 Gewichtspromille eingesetzt. Auch das unisolierte Capsaizin kann in Form von gemahlenem Cayennepfeffer oder als Chillies-Aromakonzentrat verwendet werden. Geeignet ist auch der Wirkstoff des schwarzen Pfeffers, das Piperin und seine Isomere, auch unisoliert eingesetzt als gemahlener Pfeffer oder als Rohextrakt. Dem Pelargonsäurevanillylamid wird der Vorzug gegeben, weil es bei seinen sehr geringen Einsatzkonzentrationen preiswert ist, bei den Schnecken in der Wirkkonzentration keine. Schreckreaktion auslöst, oxidationsstabil ist und seine brennende Geschmackswirkung ohne Verzögerung unmittelbar bei der Aufnahme eintritt.

Der pH-Bereich der Zubereitung beträgt im allgemeinen 4 bis 8,5, vorzugsweise liegt er im sauren Bereich, insbesondere bei 5 bis 5,5, einstellbar z. B. durch Zugabe kleiner Mengen nicht-toxischer, biologisch abbaubarer, vorzugsweise organischer Säuren oder Salze ; insbesondere eignen sich Dicarbonsäuren, Hydroxydicarbonsäuren und Hydroxycarbonsäuren. Der Wassergehalt der verbrauchsfertigen Formulierung kann bis zu 90 Gewichtsprozent betragen.

Die erfindungsgemässe Zubereitung weist gegenüber den bekannten Mitteln zur Bekämpfung von Schnecken verschiedene Vorteile auf.

Sie kann aus vollständig natürlichen Bestandteilen aufgebaut werden, so dass keinerlei schädliche Fremdstoffe im Garten zurückbleiben. Die Formulierung ist allwettertauglich, indem die Schnecken bei trockenem Wetter die feuchte Formulierung noch stärker bevorzugen und indem bei regnerischem Wetter das Regenwasser über die verdickte Mischung in die umgebende Erde abläuft. Das Mittel ist dank den erwähnten Lockstoffen auch für reine Grünblattfresser, dazu gehören viele Gehäuseschnecken, wirksam, im Gegensatz zu den bekannten kleie- und proteinhaltigen Körnern.

Wird Aethanol als lähmende Komponente verwendet, so resultiert eine völlig ungefährliche Mischung, indem die abgetöteten Schnecken hygienisch in den Erdvertiefungen liegen, versunken in der nicht-transparenten, stark schreckenden Lösung, so dass sie dem Zugriff schneckenfressender Nützlinge entzogen sind, ganz abgesehen davon, dass diese Nützlinge Aethanol metabolisieren können, so dass sich auch keine schädigenden Rückstände in ihnen akkumulieren, wenn diese Tiere trotz allem vom Aethanol aufnehmen.

Wird ein pflanzlicher molluskizider Wirkstoff, wie derjenige von Endod eingesetzt, so resultiert, verglichen mit herkömmlichen Molluskiziden, eine ungefährliche Mischung, weist doch Endod eine niedrigste letale Dosis von 3,2 g/kg für die Maus auf und ruft bei vielen Warmblütern heftigen Brechreiz hervor. Dank dem starken Lockstoff kann einer solche Formulierung gezielter und sparsamer eingesetzt werden als die bekannten Körner, die von den Schnecken mehr oder weniger zufällig gefunden werden.

Es muss grundsätzlich zwischen zwei Applikationsformen der erfindungsgemässen Zubereitung unterschieden werden, nämlich die Anwendung

(a) im Fallenprinzip mit Alkoholen als lähmender Komponente ;

(b) flächig mit echt molluskiziden Wirkstoffen.

## Beispiel 1

Eine Zubereitung wurde aus den folgenden Komponenten hergestellt :

| | | |
|---|---|---|
| Lockstoff, z. B. Aethylisobutyrat | 0,2 | Gewichtsprozent |
| Aethanol mit 2 % 2-Butanon vergällt (die Vergällung wird von der Alkoholbehörde verlangt ; wie sich zeigte, stört 2-Butanon nicht, sondern hat sogar eine geringe Lockwirkung) | 12 | Gewichtsprozent |
| Rhodopol 23$^R$ | 0,8 | Gewichtsprozent |
| Saccharose | 2,0 | Gewichtsprozent |
| Cetylalkohol | 0,05 | Gewichtsprozent |
| Pelargonsäurevanillylamid | 0,002 | Gewichtsprozent |
| Leitungswasser | | Rest |
| | 100,0 | Gewichtsprozent |

Die Saccharose wird im Wasser gelöst, die übrigen Komponenten werden zum Alkohol gegeben, dann wird unter gutem Rühren die alkoholische Mischung zur wässerigen Mischung egeben und ca. 1/4 Stunde weitergerührt bis zum vollständigen Quellen des Xanthen Gum's.

Die verdickte Lösung wurde direkt in eine Erdvertiefung gegossen, die mit der Handschaufel ausgehoben wurde. solche Erdvertiefungen wurden in Abständen von etwa 2 bis 4 m angelegt und in jede wurde etwa 0,5 bis 1 dl der verdickten Lösung eingefüllt. Es wurde festgestellt, dass die Wirkung umso grösser ist, je tiefer der Flüssigkeitsspiegel liegt, je steiler die umgebenden Erdböschungen sind und je dünnflüssiger die Lösung ist.

Die Schnecken wurden angelockt und begannen am Rande der verdickten Lösung zu fressen. Erst nach gewisser Zeit, als Folge der Aethanolaufnahme durch Mund und Fuss, versuchten sie auf die verdickte Lösung hinauszukriechen, wobei sie mit dem Vorderteil einsanken und nicht mehr wenden konnten. Danach verloren sie, durch die dermale Alkoholaufnahme gelähmt, den Halt und versanken. Es wurde auch beobachtet, wie die Schnecken, nach dem Fressen der verdickten Lösung, sich beim Wegkriechen, wohl als Folge einer partiellen Lähmung, verdrehten und dadurch in die Lösung kippten, woraus sie sich nicht mehr befreien konnten und wo sie schliesslich durch die Aufnahme einer letalen Aethanolmenge durch die Haut zu Grunde gingen.

Die Wirkung des Mittels erfolgte sehr rasch, schon nach wenigen Abendstunden waren die flüssigkeitsgefüllten Vertiefungen voller toter Schnecken. Die Wirkung der Lösung dauerte, abhängig von der Witterung, Erdbeschaffenheit und Anzahl toter Schnecken, etwa 2 bis 3 Nächte. Die Vertiefungen wurden nach dieser Zeit mit Erde zugedeckt, sofern sie nicht schon von selbst in sich zusammengefallen waren. Zum Teil wurde noch einmal Lösung nachgegeben, wenn sich der Inhalt mit den toten Schnecken gesetzt hatte.

## Beispiel 2

Gemäss Literatur ist Bier ein ausgezeichnetes Schneckenlockmittel [s. Godan, loc. cit.] deshalb wurde Bier als Referenz gewählt.

(a) In einem Zweikammersystem, mit welchem den Schnecken in der einen Kammer Bier, in der anderen Kammer ein erfindungsgemäss verwendeter Lockstoff angeboten wurde, ergab sich folgende Verteilung, wobei jeweils bei den drei unabhängigen Versuchen zwanzig Schnecken der Art Arion rufus in die Ausgangsposition gebracht wurden :

(Siehe Tabelle Seite 7 f.)

| Anzahl Schnecken in der Kammer mit Bier : | Anzahl Schnecken in der Kammer mit dem Lockstoffgemisch Aethylisobutyrat/Aethylacetat/Propylacetat/Butylformiat im Verhältnis 50/20/20/10 und in der Konzentration von 1 Promille in 5 % 2-Butanon vergälltem Alkohol : |
|---|---|
| 1 | 18 |
| 3 | 17 |
| 4 | 11 |
| 8 | 46 |

(b) Bei einem Versuch in einem Treibhaus mit Erdfallen in 4 m Abständen mit einer Zubereitung, wie in Beispiel 3A, und einem Lockstoffgemisch der Zusammensetzung 40 % Aethylisobutyrat, 20 % Aethylacetat, 15 % Isopropylacetat, 5 % Propylacetat, 5 % Methylisobutyrat, 5 % Methylbutyrat, 5 % Aethylpropionat, abgerundet mit anderen Estern bis zu 7 Kohlenstoffatomen, ergaben folgende Resultate : Die Mischung war im Mittel zehnmal wirksamer als Bier, wobei bei zwei Schneckenarten über 90 %, bei einer weiteren Art 75 % der ausgesetzten Schnecken abgefangen wurden.

Die besten Fangergebnisse lieferten die niederen Ester mit bis zu 6 Kohlenstoffatomen in Konzentrationen von total 1 bis 1,5 Gewichtspromille, wobei die verzweigtkettigen Ester attraktiver zu sein schienen als die geradkettigen. Ernsthafte Schreckreaktionen scheinen bei diesen Estern erst ab 2 Gewichtspromille aufzutreten, wobei dieser Umkehrbereich artspezifisch zu sein scheint. Die höheren Ester lösten aber schon bei deutlich geringeren Konzentrationen Schreckreaktionen aus, was mit einem deutlichen Wirkungsabfall verbunden war, so dass sie nur in Konzentrationen von total 0,1 Gewichtspromille zum Abrunden der Lockstoffmischung eingesetzt wurden.

Die im Beispiel angegebenen 2 Promille niederen Ester werden durch den Cetylalkohol gemildert, der auch die Ester um ca. 50 % zurückhält.

## Beispiel 3

Die Frassstoffe haben eine äusserst wichtige Funktion, indem sie die Schnecken veranlassen, die Formulierung lange zu kontaktieren, so dass die lähmende oder tötende Komponente ihre Wirkung tun kann. Wie die folgenden Beispiele belegen, kann mit den geeigneten Frassstoffen die Wirkung der Formulierung ganz wesentlich gesteigert werden, wobei nicht auszuschliessen ist, dass von den natürlichen Frassstoffen selbst noch in geringsten Mengen flüchtige Stoffe ausgehen, welche die Wirkung der Ester verstärken.

Die Basiszusammensetzung ist diejenige von Beispiel 1, das Lockstoffgemisch ist dasjenige von Beispiel 2 (b), der Frassstoff und der pH werden wie folgt ergänzt bzw. variiert :

Formulierung :

A = wie Beispiel 1 mit 2 % Saccharose, aber zusätzlich 0,05 % Hexamethylentetramin, pH ca. 7,5 ;

B = wie Beispiel 1 mit 2 % Saccharose, aber zusätzlich 2 % Stärkesirup (bestehend aus Glukose, Maltose und Oligosacchariden), auf pH 5,5 eingestellt mit Zitronensäure ;

C = wie Mischung B aber zusätzlich mit 1 % Weizenkleiemehl und 1 % Magermilchpulver ;

D = wie Mischung B aber zusätzlich mit 1 % Malzmehl und 1 % Magermilchpulver ;

E = wie Mischung B aber zusätzlich mit 1 % fein gepulvertem Kasein ;

F = 2 % Saccharose und 1 % homogenisierten Spinat, pH 5,5 ;

G = wie Mischung B aber mit 1 % Weizenquellstärke ;

H = wie Mischung B aber mit 1 % nativer Maisstärke.

Zum Ansäuern wurde Zitronensäure verwendet. Mit diesen verschiedenen Zubereitungen wurden folgende Feldversuche ausgeführt :

Zeit : Ende Mai

Ort : Grasböschung mit Büschen entlang einer Strasse

Versuchsanordnung : abwechselnd A1, B1, F1.., A2, B2, F2.. etc., wurden alle 3 bis 4 m 0,7 dl verdickter Lösung in normierte Vertiefungen — paraffinierte Kartonbecher — so gegeben, dass z. B. über der Lösung als mechanisches Hindernis eine 1 bis 2 cm hohe Wand stand Durchmesser der Vertiefungen : 6 cm.

Artenspektrum : das gefangene Artenspektrum schien sich, soweit durch Beobachtung festgestellt werden konnte, mit der Häufigkeit des Vorkommens der einzelnen Arten zu decken.

Hauptsächlich vorhanden waren : Arion rufus, vorwiegend Tiere unter 5 cm, wenige darüber, Arion subfuscus, wenige Tiere Arion silvaticus, Deroceras, vereinzelt andere Nacktschnecken, von den Gehäuseschnecken waren punktweise Helicigona arbustorum häufig, vereinzelt Cepaea, phasenweise unbestimmte kleine Gehäuseschnecken häufig. Im folgenden werden die Gesamtschneckenzahlen der als Schädlinge auftretenden Nacktschnecken und grösseren Gehäuseschnecken angegeben, die phasenweise in grosser Zahl abgefangegen kleinen Gehäuseschnecken werden nicht aufgeführt.

| A | B | C | D | E | F | | A | G | H |
|---|---|---|---|---|---|---|---|---|---|
| 64 | 95 | 70 | 44 | 63 | 59 | | 5 | 20 | 9 |
| 11 | 21 | 33 | 22 | 32 | 13 | | 11 | 28 | 18 |
| 8 | 10 | 6 | 24 | 29 | 5 | | 9 | 21 | 24 |
| 13 | 16 | 13 | 7 | 1 | 59 | | 5 | 30 | 17 |
| 20 | 69 | 59 | 35 | 24 | 23 | | 8 | 19 | 10 |
| 51 | 14 | 21 | 64 | 84 | 33 | | 5 | 10 | 19 |
| 9 | 18 | 56 | 41 | 16 | 10 | | 6 | 13 | 18 |
| 17 | 10 | 49 | 75 | 59 | 27 | | 13 | 36 | 35 |
| 17 | 58 | 60 | 52 | 55 | 23 | | 9 | 31 | 27 |
| 5 | 27 | 35 | 22 | 15 | 28 | | 15 | 40 | 36 |
| 215 | 338 | 412 | 386 | 378 | 280 | | 86 | 248 | 213 |

Bei A bis F und A, G, H handelt es sich um zwei verschiedene Versuche, wobei A als Referenz diente.

Becher mit über 40 Schnecken waren, je nach Schneckengrösse, als voll zu bezeichnen, d. h. die toten Schnecken lagen darin dicht gedrängt, so dass keine weiteren Schnecken darin Platz finden konnten.

## Beispiel 4

Beispiel 3 wurde wiederholt, anstelle von Xanthan Gum wurden jedoch folgende Verdicker verwendet :

(a) 1,3 Gewichtsprozent Natrosol® 250 H4BR von Hercules (eine hochmolekulare, besonders regelmässig substituierte Hydroxyäthylcellulose) und 0,1 Gewichtsprozent Aubigum® X2 von Ceca (ein kaltwasserlösliches Carraghenat), pH 5,5 mit Zitronensäure.

(b) 1,2 Gewichtsprozent Jaguar® HP60 von Stein-Hall (ein hochsubstituierter Hydroxypropyl-Guar) und 0,1 Gewichtsprozent Kelgin® HV (ein Alginat).

Als Cellulase-Inhibitor wird vorzugsweise 2 % Lactose zugegeben.

Die Alginat- bzw. Carraghenatzusätze sollen als Hilfen gegen die Versickerung fungieren, indem sie durch die Kaliumionen (Carraghenat) oder durch die Calciumionen (Alginat) der umgebenden Erde gelieren. Zudem bilden diese Algenzusätze auch um die Schnecken eine gelöste Schutzschicht, welche den Austritt der Verdauungsenzyme verhindert. Die Resultate waren mit denen aus Beispiel 3 vergleichbar. Dem Xanthan Gum wird aber wegen seiner grösseren Anwendungssicherheit und wegen seiner Natürlichkeit der Vorzug gegeben. Kaltwasserlösliches Carraghenat, welches sich für den alleinigen Einsatz eignen würde, ist dafür zu teuer.

## Beispiel 5

Endod wird zusätzlich zum Aethanol der vorangegangenen Mischung zugesetzt. Dadurch braucht die Mischung nicht mehr im Fallenprinzip angewendet zu werden, sondern kann flächig in kleinen Mengen direkt auf die Erde gegeben werden, eventuell in kleine natürliche Mulden, in Abständen von 2 bis 3 m. Die Schnecken werden beim Frasskontakt irreversibel durch Endod geschädigt und gehen neben der ausgegossenen Mischung zugrunde.

Die Mischung wird genau wie in Beispiel 1 hergestellt, in derselben Zusammensetzung oder in einer der Zusammensetzungen von Beispiel 2, nur, dass zusätzlich im Aethanol 0,1 bis 10 Gewichtsprozent, vorzugsweise 1 bis 5 Gewichtsprozent Endod-Beeren feinst zerschnitten werden, und dass im wässerigen Teil zur Stabilisierung des Endod-Wirkstoffes 0,5 Gewichtsprozent Zitronensäure/Zitrat-Puffer für den pH 5,5 zusammen mit 0,3 Gewichtsprozent Ascorbinsäure eingelöst werden. Es empfiehlt sich, die Konzentrationen zweier Komponenten aus dem Beispiel 1 anzuheben, um das schnellere Verflüchtigen bei der flächigen Anwendung zu kompensieren, den Lockstoff auf 0,3 Gewichtsprozent und um das Zerfliessen der Formulierung auf der Erde zu verhindern, den Xanthan Gum auf 1,2 Gewichtsprozent. Alle Prozentangaben beziehen sich auf die Gesamtformulierung.

Neben den kleinen direkt auf die Erde gegossenen Mengen der beschriebenen Zubereitung fanden sich tote Schnecken.

**Ansprüche**

1. Zubereitung zur Bekämpfung von Schnecken, enthaltend

(a) mindestens einen Lockstoff für Schnecken ;

(b) mindestens einen Frassstoff ;

(c) mindestens eine auf Schnecken betäubend und/oder koordinationsstörend und/oder lähmend und/oder tötend wirkende Substanz ;

(d) Wasser, und

(e) gegebenenfalls mindestens ein Verdickungsmittel,

dadurch gekennzeichnet, dass sie als Lockstoff mindestens 0,2 Gew.-‰ eines Esters einer niederen bis mittleren Carbonsäure mit einem niederen einwertigen Alkohol oder eine Mischung solcher Ester und als Komponente (c) mindestens einen niederen einwertigen Alkohol, vorzugsweise Aethanol, und/oder ein Molluskizid, enthält.

2. Zubereitung nach Patentanspruch 1, dadurch gekennzeichnet, dass sie als Lockstoff mindestens einen Ester mit bis zu 8 Kohlenstoffatomen, bestehend aus einer aliphatischen Carbonsäure mit einem einwertigen aliphatischen Alkohol, vorzugsweise in Konzentration von 1 bis 2 Gewichtspromille, bezogen auf die Gesamtzubereitung, enthält.

3. Zubereitung nach Patentanspruch 2, dadurch gekennzeichnet, dass sie als Lockstoff ein Acetat, n-Butyrat oder Isobutyrat enthält, vorzgugsweise deren Methyl-, Aethyl- oder Propylester, oder dass sie eine Mischung dieser Ester auf der Basis von einem Butyrat und mindestens zwei Acetaten enthält.

4. Zubereitung nach einem der Patentansprüche 1 bis 3, dadurch gekennzeichnet, dass sie als Verdickungsmittel ein Heteropolysaccharid, das durch Fermentation von Kohlehydraten mit Bakterien der Art Xanthomonas entstanden ist, enthält.

5. Zubereitung nach einem der Patentansprüche 1 bis 3, dadurch gekennzeichnet, dass sie als Verdickungsmittel hochmolekulare enzymresistente Hydroxyäthylcellulose enthält.

6. Zubereitung nach einem der Patentansprüche 1 bis 5, dadurch gekennzeichnet, dass sie als weitere Hilfsmittel einen Verdunstungsverzögerer, vorzugsweise Cetylalkohol, und einen Schreckstoff für Warmblüter, vorzugsweise Capsaizin oder Pelargonsäurevanillylamid, enthält.

7. Verfahren zum Schutz von Pflanzenkulturen gegen Schnecken, dadurch gekennzeichnet, dass man den Kulturboden in Abständen mit einer wirksamen Menge einer Zubereitung nach einem der Patentansprüche 1 bis 6 versieht.

8. Verfahren nach Patentanspruch 7, dadurch gekennzeichnet, dass man den Kulturboden am Rand der Pflanzungen in Abständen mit Vertiefungen versieht und die bevorzugt flüssige oder pseudoplastisch-giessbare Zubereitung in diese Vertiefungen einfüllt und die Vertiefungen nach Bedarf mit Erde zuschüttet, nachdem die Schnecken darin abgetötet worden sind.

9. Verfahren nach Patentanspruch 8, dadurch gekennzeichnet, dass man die Bodenvertiefungen mit einem Behalter oder Flächengebilde zur Aufnahme einer flüssigen Zubereitung versieht, der bzw. das unter Feuchtigkeitseinwirkung in der Erde verrottet oder sich auflöst.

10. Verfahren nach Patentanspruch 9, dadurch gekennzeichnet, dass der Behälter bzw. das Flächengebilde auf der mit der Zubereitung nach einem der Patentansprüche 1 bis 6 in Berührung kommenden Oberfläche hydrophobiert ist.

11. Verfahren nach Patentanspruch 7, dadurch gekennzeichnet, dass man eine pasten- oder gelförmige Zubereitung nach einem der Patentansprüche 4 bis 6 in wirksamer Menge zwischen die Pflanzen auf den Boden appliziert.


## Claims

1. Preparation for the control of slugs and snails, containing
   (a) at least one lure for slugs and snails,
   (b) at least one ingestible substance,
   (c) at least one substance acting on slugs and snails by anaesthetising them and/or killing them,
   (d) water and
   (e) if appropriate, at least one thickener,
characterised in that it contains, as the lure, at least 0.02 % by weight of an ester of a lower to medium carboxylic acid with a lower monohydric alcohol or a mixture of such esters and, as the component (c), at least one lower monohydric alcohol, preferably ethanol, and/or a molluscicide.

2. Preparation according to Patent Claim 1, characterised in that it contains, as the lure, at least one ester having up to 8 carbon atoms and consisting of an aliphatic carboxylic acid with a monohydric aliphatic alcohol, preferably in a concentration of 0.1 to 0.2 per cent by weight, relative to the total preparation.

3. Preparation according to Patent Claim 2, characterised in that it contains, as the lure, an acetate, n-butyrate or isobutyrate, preferably the methyl, ethyl, or propyl ester thereof, or that it contains a mixture of these esters based on one butyrate and at least two acetates.

4. Preparation according to one of Patent Claims 1 to 3, characterised in that it contains, as the thickener, a heteropolysaccharide formed by fermentation of carbohydrates with bacteria of the species Xanthomonas.

5. Preparation according to one of Patent Claims 1 to 3, characterised in that it contains, as the thickener, high-molecular enzyme-resistant hydroxyethylcellulose.

6. Preparation according to one of Patent Claims 1 to 5, characterised in that it contains, as further auxiliaries, an evaporation retarder, preferably cetyl alcohol, and a deterrent for warm-blooded animals, preferably capsaicin or pelargonic acid vanillylamide.

7. Method for protecting plant crops from slugs and snails, characterised in that the crop soil is provided at intervals with an effective amount of a preparation according to one of Patent Claims 1 to 6.

8. Method according to Patent Claim 7, characterised in that the crop soil is provided at the edge of the plantations with depressions at intervals, and these depressions are filled with the preferably liquid or pseudoplastically pourable preparation and, if required, covered with earth, after the slugs and snails have been killed therein.

9. Method according to Patent Claim 8, characterised in that the depressions in the soil are provided with a container or sheet-like structure which is to receive a liquid preparation and which rots or dissolves in the soil under the action of moisture.

10. Method according to Patent Claim 9, characterised in that the container or sheet-like structure has been rendered hydrophobic on the surface which comes into contact with the preparation according to one of Patent Claims 1 to 6.

11. Method according to Patent Claim 7, characterised in that an effective amount of a preparation according to one of Patent Claims 4 to 6 in the form of a paste or gel is applied to the soil between the plants.


**Revendications**

1. Préparation pour la lutte contre les limaces et/ou escargots, qui contient
   (a) au moins un appât pour les limaces et/ou escargots ;
   (b) au moins une substance alimentaire ;
   (c) au moins une substance exerçant sur les limaces et/ou escargots un effet narcotique et/ou perturbateur de la coordination et/ou paralysant et/ou létal ;
   (d) de l'eau, et
   (e) éventuellement au moins un agent épaississant,
caractérisée en ce qu'elle contient comme appât, au moins 0,2‰ en poids d'un ester d'un acide carboxylique inférieur à moyen avec un alcool monovalent inférieur ou un mélange de tels esters et comme composant (c), au moins un alcool monovalent inférieur, de préférence de l'éthanol, et/ou un molluscicide.

2. Préparation suivant la revendication 1, caractérisée en ce qu'elle contient comme appât, au moins un ester comptant jusqu'à 8 atomes de carbone formé par un acide carboxylique aliphatique avec un alcool aliphatique monovalent, de préférence en concentration de 1 à 2 % en poids.

3. Préparation suivant la revendication 1, caractérisée en ce qu'elle contient comme appât, un acétate, n-butyrate ou isobutyrate, de préférence leur ester méthylique, éthylique ou propylique, ou contient un mélange de ces esters à base d'un butyrate et d'au moins deux acétates.

4. Préparation suivant l'une quelconque des revendications 1 à 3, caractérisée en ce qu'elle contient comme agent épaississant, un hétéropolysaccharide qui s'est formé par fermentation d'hydrates de carbone par des bactéries du genre Xanthomonas.

5. Préparation suivant l'une quelconque des revendications 1 à 3, caractérisée en ce qu'elle contient comme agent épaississant, une hydroxyéthylcellulose de haut poids moléculaire résistant aux enzymes.

6. Préparation suivant l'une quelconque des revendications 1 à 5, caractérisée en ce qu'elle contient comme autres agents auxiliaires, un retardeur d'évaporation, de préférence de l'alcool cétylique, et une substance répulsive pour les homéothermes, de préférence de la capsaïsine ou du vanillylamide pélargonique.

7. Procédé de protection de cultures de plantes contre les limaces et/ou escargots, caractérisé en ce qu'on munit le sol de culture par intervalles d'une quantité efficace d'une préparation suivant l'une quelconque des revendications 1 à 6.

8. Procédé suivant la revendication 7, caractérisé en ce qu'on munit le sol de culture de dépressions par intervalles à la limite des plantations et on introduit la préparation, de préférence liquide ou pseudoplastique versable, dans ces dépressions, puis on referme les dépressions suivant les besoins avec de la terre après que les limaces et/ou escargots y ont été tués.

9. Procédé suivant la revendication 8, caractérisé en ce qu'on munit les dépressions dans le sol d'un récipient ou d'un produit manufacturé plat qui est propre à recevoir une préparation liquide et qui pourrit ou se dissout dans la terre sous l'effet de l'humidité.

10. Procédé suivant la revendication 9, caractérisé en ce que le récipient ou produit manufacturé plat est rendu hydrophobe sur sa face venant en contact avec la préparation suivant l'une quelconque des revendications 1 à 6.

11. Procédé suivant la revendication 7, caractérisé en ce qu'on applique une préparation pâteuse ou gélifiée suivant l'une quelconque des revendications 4 à 6 en quantité efficace sur le sol entre les plantes.